Europäisches Patentamt

European Patent Office

Office européen des brevets

(11) Numéro de publication: **0 323 363 B1**

# FASCICULE DE BREVET EUROPEEN

(45) Date de publication de fascicule du brevet: **14.10.92**   (51) Int. Cl.⁵: **H04N 11/04**, H04N 7/137

(21) Numéro de dépôt: **88403375.4**

(22) Date de dépôt: **30.12.88**

(54) **Procédé de synchronisation pour la transmission, sur un canal asynchrone, d'une suite d'images codées au moyen d'un code à longueur variable, et dispositif pour la mise en oeuvre de ce procédé.**

(30) Priorité: **30.12.87 FR 8718372**

(43) Date de publication de la demande:
**05.07.89 Bulletin 89/27**

(45) Mention de la délivrance du brevet:
**14.10.92 Bulletin 92/42**

(84) Etats contractants désignés:
**AT CH DE ES GB IT LI NL SE**

(56) Documents cités:
**EP-A- 0 084 270
EP-A- 0 103 380
EP-A- 0 141 721
US-A- 3 553 362**

**ELECTRONICS AND COMMUNICATIONS IN JAPAN, vol. 59-A, no. 11, novembre 1976, pages 51-60; Y. SATO et al.: "DPCM coding method using variable-length codes for video telephone signals"**

**THE BELL SYSTEM TECHNICAL JOURNAL, vol. 54, no. 8, octobre 1975, pages 1475,1483-1485,1495, American Telephone and Telegraph Co., US; B.G. HASKELL et al.:**

**"A low-bit-rate interframe coder for videotelephone"**

**EUROPEAN BROADCASTING UNION, Tech. 3258-E, octobre 1986, Technical Centre, Bruxelles, pages 21-28,43-47; "Specification of the systems of the MAC/packet family"**

(73) Titulaire: **THOMSON GRAND PUBLIC
74, rue du Surmelin
F-75020 Paris(FR)**

(72) Inventeur: **Auvray, Eric
SCPI - 19, avenue de Messine
F-75008 Paris(FR)**
Inventeur: **Perron, Claude
SCPI - 19, avenue de Messine
F-75008 Paris(FR)**

(74) Mandataire: **Sciaux, Edmond et al
THOMSON-CSF SCPI
F-92045 PARIS LA DEFENSE CEDEX 67(FR)**

EP 0 323 363 B1

## Description

L'invention concerne un procédé de synchronisation pour la transmission, sur un canal asynchrone, d'une suite d'images codées au moyen d'un code à longueur variable, et un dispositif pour la mise en oeuvre de ce procédé. Un tel procédé permet par exemple de transmettre des images vidéo numériques sur un canal asynchrone distribuant ces images à des abonnés.

A l'avenir, la distribution des images vidéo sera réalisée sous forme numérique, au moyen de procédés de codage procurant une très forte réduction du débit d'informations, en particulier des procédés de codage par blocs d'éléments d'image mettant en oeuvre une transformation bidimensionnelle telle que la transformation cosinus ; et mettant en oeuvre un codage à longueur variable tel qu'un codage de Huffmann. Un tel procédé est décrit, par exemple, par le demande de brevet EP-A-0 084 270. La synchronisation du canal sur le rythme d'échantillonnage des images vidéo n'est pas possible en pratique car il y a de nombreuses sources de signaux vidéo qui sont indépendantes les unes des autres et qui sont indépendantes du canal de transmission. Il est donc nécessaire de mettre en oeuvre un procédé de synchronisation permettant, au décodage, de retrouver le rythme d'échantillonnage vidéo et permettant de restituer des images en limitant le plus possible les dégradations dues aux erreurs de transmission affectant les signaux de synchronisation.

D'autre part, il est nécessaire de pouvoir distinguer les données codées correspondant à chaque image et les données codées correspondant à chaque bloc à l'intérieur d'une image.

Les données codées correspondant à chaque bloc d'éléments d'image peuvent être distinguées au moyen de séparateurs appelés séparateurs inter-blocs, et les données codées correspondant à chaque image peuvent être distinguées au moyen de séparateurs appelés séparateurs d'images, mais l'utilisation de codes à longueurs variables a pour conséquence que ces séparateurs n'ont pas une position constante dans le flux des données binaires transmises et il n'est donc pas possible de récupérer le rythme d'échantillonnage des images vidéo par un procédé du type filtrage. Un premier but de l'invention est donc de proposer un procédé de synchronisation permettant de récupérer le rythme d'échantillonnage des images vidéo, et permettant de distinguer les différentes données codées.

Les procédés de codage à hautes performances comportent en général une étape de codage différentiel pour les blocs d'éléments d'image dont la luminance et les différences de couleur ont peu varié par rapport au bloc homologue dans l'image immédiatement précédente. Cette étape de codage différentiel permet une forte réduction de la quantité d'informations à transmettre mais a pour inconvénient de rendre catastrophique une erreur de transmission affectant un bloc. En effet, si une suite de blocs homologues dans la suite d'images est transmise avec ce codage différentiel et si une erreur affecte le premier bloc de la suite, toute cette suite de blocs homologues sera restituée de manière erronée. D'autre part, l'absence de détection d'un séparateur inter-blocs peut affecter la position de tous les blocs qui suivent et peut donc causer un décalage des blocs de l'image restituée. Et, si les images suivantes sont codées par un codage différentiel se référant à l'image erronée, elles seront, elles aussi, restituées de manière erronée. Un autre but de l'invention est donc de proposer un procédé de synchronisation permettant d'éviter que les conséquences d'une erreur de transmission sur les signaux de synchronisation se propagent d'un bloc à un autre dans une même image restituée et se propagent dans la suite d'images restituées.

Selon l'invention, un procédé de synchronisation pour la transmission, sur un canal asynchrone, d'une suite d'images codées au moyen d'un code à longueur variable, est caractérisé en ce qu'il consiste à transmettre, en plus des données, des séparateurs appelés séparateurs inter-blocs, pour séparer les données correspondant à des blocs distincts, et des séparateurs appelés séparateurs d'images pour séparer les données correspondant à des images successives ; et en ce qu'il consiste, en outre, à transmettre des premiers motifs de synchronisation à la fréquence des lignes d'image et des seconds motifs de synchronisation à la fréquence des images, en interrompant la transmission des données et des séparateurs ; les séparateurs étant inimitables par des concaténations licites de données et/ou de séparateurs.

L'invention sera mieux comprise et d'autres détails apparaîtront à l'aide de la description ci-dessous et des figures l'accompagnant :
- la figure 1 représente les signaux de synchronisation d'un dispositif de codage et d'un dispositif de décodage, dans un exemple de mise en oeuvre du procédé selon l'invention ;
- les figures 2 et 3 représentent le schéma synoptique d'un exemple de réalisation d'un dispositif de codage comportant un dispositif de synchronisation pour la mise en oeuvre du procédé selon l'invention ;
- les figures 4 et 5 représentent le schéma synoptique d'un exemple de réalisation d'un dispositif de décodage comportant un dispositif de synchronisation pour la mise en oeuvre du procédé selon l'invention.

Dans un exemple de mise en oeuvre, la suite d'images est constituée par une suite de trames de télévision en couleurs,échantillonnées et numérisées. Chaque élément d'image est représenté par une valeur de luminance, une valeur de différence de couleur rouge, et une valeur de différence de couleur bleue. Chaque image de télévision à coder est constituée par deux trames entrelacées analysées d'une manière classique par une caméra de télévision. Les deux trames sont codées séparemment.

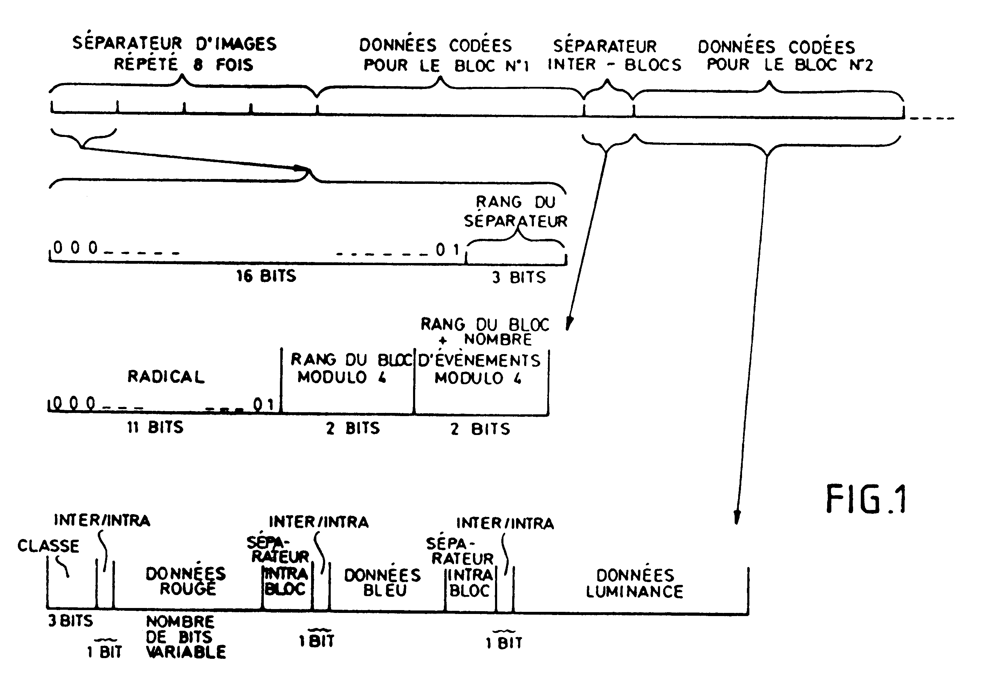

La figure 1 représente, dans sa partie supérieure, le format des informations binaires transmettant une suite d'images codées par blocs d'éléments d'image, au moyen d'une transformation bidimensionnelle et au moyen de codes à longueurs variables. Par exemple, le procédé de codage consiste à :

- diviser chaque trame en blocs d'éléments d'image, chaque bloc étant représenté par un bloc de 16x16 valeurs de luminance, un bloc de 16x8 valeurs de différence de couleur bleue, et un bloc de 16x8 valeurs de différence de couleur rouge ;
- appliquer la transformation cosinus bidimensionnelle à chaque bloc de valeurs, pour obtenir un bloc de coefficients de transformation du bloc de valeurs considéré ;
- transmettre, pour chaque bloc de valeurs : soit la valeur des coefficients de transformation du bloc, soit la différence de valeur de ces coefficients de transformation, par rapport à la valeur des coefficients de transformation d'un bloc homologue dans la trame de même parité précédant la trame en cours de codage, de façon à minimiser la quantité d'informations à transmettre pour le bloc considéré ; le codage étant dit intra-image ou inter-images respectivement ; et le type de codage pouvant être différent pour les trois types de valeurs représentant un même bloc d'élément d'image.

Le codage consiste en outre à multiplier les coefficients de transformation et les différences de coefficients de transformation, avant leur transmission, par un coefficient dit de pondération, favorisant les basses fréquences spatiales des images et qui varie en fonction de la quantité d'informations à transmettre. Les coefficients pondérés sont ensuite quantifiés selon une échelle linéaire dont le pas est variable en fonction de la quantité d'informations à transmettre. Ceci équivaut à multiplier les coefficients pondérés, par un coefficient dit de quantification, variable en fonction de la quantité d'informations à transmettre, en ne conservant que la partie entière du résultat de la multiplication. Puis les coefficients de transformation ou les différences de coefficients de transformation sont transmis par des codes de Huffmann, c'est-à-dire des mots de codes ayant une longueur variable, les mots de code de longueurs les plus courtes étant utilisés pour coder les événements qui sont statistiquement les plus fréquents.

Il est à noter que les blocs de coefficients de transformation et les blocs de différences de coefficients de transformation comportent de nombreuses valeurs nulles. En particulier lorsque les coefficients ou les différences de coefficients sont balayés dans un ordre où les coefficients de transformation ont des valeurs décroissantes statistiquement, les derniers coefficients ou différences de coefficients forment une longue plage de zéros. Pour tirer parti de ce fait, les valeurs nulles sont codées par plages, la longueur de chaque plage étant transmise par un code de Huffmann. La dernière plage de zéros de chaque bloc n'est pas codée, car les données codées de chaque bloc sont séparées des autres par un séparateur inter-blocs qui permet donc de reconnaître la fin des valeurs non nulles dans un bloc. Il est à noter aussi que la valeur du coefficient ou de la différence de coefficients de transformation ayant le plus bas indice de ligne et le plus bas indice de colonne dans chaque bloc n'est pas codée par un code de Huffmann mais est transmise en clair, car cette valeur est particulièrement importante pour une bonne restitution du bloc d'éléments d'image. Ceci évite une erreur de quantification qui est variable en fonction de la quantité d'informations à transmettre.

Réciproquement, le décodage consiste, pour chaque bloc, à :

- reconnaître chacun des mots de code de Huffmann et à restituer une valeur de coefficient de transformation ou de différence de coefficients de transformation ;
- multiplier chaque valeur de coefficient de transformation ou de différence de coefficients de transformation par un coefficient égal à l'inverse du coefficient de pondération utilisé pour le codage et par un coefficient égal à l'inverse du coefficient de quantification utilisé pour le codage ;
- additionner, à la valeur de chaque différence de coefficient de transformation, la valeur d'un coefficient de transformation, homologue du coefficient considéré dans un bloc homologue du bloc considéré et appartenant à la trame de même parité précédant la trame en cours de décodage ;
- appliquer à chaque coefficient de transformation une transformation cosinus inverse bidimensionnelle, pour obtenir un bloc de valeurs, de luminance ou de différence de couleur, représentant une portion d'image décodée.

Dans l'exemple de procédé de codage et de décodage qui est considéré ici pour illustrer la mise en oeuvre du procédé de synchronisation, le coefficient de pondération et le coefficient de quantification sont en outre fonctions d'un paramètre appelé classe du bloc et qui traduit la difficulté de codage du bloc considéré. Lorsqu'un bloc est difficile à coder, c'est-à-dire lorsqu'il est très sensible aux erreurs de codage, ce paramètre commande une réduction de la sévérité de la pondération et de la quantification pour réduire les erreurs dues au codage et au décodage. Les blocs considérés comme difficiles à coder sont ceux qui comportent une zone sombre étendue qui est à cheval sur la frontière entre le bloc considéré et un autre bloc. Dans une telle zone sombre le bruit granulaire est particulièrement visible et met en évidence la frontière entre les deux blocs si le codage réduit trop la quantité d'informations correspondant aux détails de l'image.

La figure 1 représente les données codées obtenues en appliquant le procédé de codage décrit ci-dessus et représente les séparateurs de données qui sont insérés entre ces données pour distinguer la nature des divers paquets de données codées qui sont transmis en série.

Pour retrouver le rythme, dit rythme vidéo, de l'échantillonnage des images, deux types de motifs de synchronisation sont transmis indépendamment des données codées et de leurs séparateurs, en gelant la transmission de ces données codées. Un motif de synchronisation image est transmis avec une fréquence de 25 Hz, avant les données codées de chaque trame paire ; et un motif de synchronisation ligne est transmis à la fréquence de 15625 Hz, pour asservir une horloge à la fréquence d'échantillonnage des éléments d'image. Ces deux types de motif de synchronisation n'ont pas une position fixe par rapport aux données codées et ne sont pas représentées sur la figure 1.

Ces deux types de motif de synchronisation n'ont pas besoin d'être inimitables par des concaténations de données, car ces motifs sont séparés d'un nombre de bits déterminé à 1 bit près. Un apprentissage, consistant à vérifier la présence de motifs successifs aux instants prévus, permet de les distinguer des données.

Sur la figure 1, les données codées correspondant à deux trames sont précédées d'un séparateur d'images qui est répété 8 fois, dans cet exemple. Chaque séparateur d'images comporte un radical de 16 bits comportant 15 zéros et 1 un ; et comporte un mot binaire de 3 bits donnant le rang du séparateur parmi les 8 séparateurs. En pratique, le nombre de répétitions est choisi en fonction du taux d'erreur dans le canal de transmission. Le préfixe est un mot binaire non imitable par une concaténation licite des mots de code de Huffmann et des mots séparateurs inter-blocs. La répétition des séparateurs d'images permet de les protéger contre les erreurs isolées et les petits paquets d'erreurs. La détection d'un séparateur d'images n'est validée que si elle est réalisée plusieurs fois et la position exacte des séparateurs d'images est connue grâce aux 3 bits codant le rang de chaque séparateur d'images.

Les données codées correspondant au bloc n°1 sont transmises après le séparateur d'images répété 8 fois. Puis un séparateur inter-blocs est transmis et précède les données codées pour le bloc n°2. Le séparateur inter-blocs comporte un radical de 11 bits constitué de 10 zéros et de 1 un ; un mot binaire de deux bits traduisant le rang du bloc, modulo 4 ; et un mot binaire de deux bits traduisant la somme modulo 4 du rang du bloc et du nombre d'événements codés dans le bloc suivant le séparateur inter-blocs. Le radical ainsi constitué est non inimitable par une concaténation licite des mots de code appartenant aux arbres de codage de Huffmann. Pour cela, ces arbres de codage comportent des mots de code commençant par au plus quatre 0 et se terminant par au plus cinq 0. Un mot de code ne comportant que des 0 est interdit car s'il était répété il y aurait imitation du séparateur inter-blocs.

La partie inférieure de la figure 1 représente le format des données codées pour un bloc. Il comporte : un mot binaire de trois bits, appelé classe du bloc, et qui est un paramètre intervenant dans le codage du bloc, comme cela sera expliqué plus loin ; un bit indiquant le type de codage, inter-images ou intra-image, des données codées du signal de différence de couleur rouge ; puis ces données, avec un nombre de bits variables ; puis un séparateur intra-bloc constitué par un mot de code de Huffmann ; puis un bit, noté inter-intra, indiquant le type de codage des données codées pour le signal de différence de couleur bleue ; puis un séparateur intra-bloc, constitué par un mot de code de Huffmann ; puis un bit indiquant le type de codage pour les données codées du signal de luminance ; puis les données codées du signal de luminance.

Il est à remarquer que les séparateurs d'images introduisent une redondance négligeable compte tenu de leur rareté. Les séparateurs intra-blocs sont indispensables puisque la dernière plage de zéros de chaque bloc n'est pas codée. Ils ne sont pas protégés et ils n'introduisent donc pas de redondance. Par contre il y a une redondance dans les séparateurs inter-blocs. Selon l'art antérieur, les séparateurs inter-blocs appartenaient aux arbres de codage inter-images et intra-image du signal de luminance et avaient une longueur de 5 bits. Celui utilisé dans cet exemple de mise en oeuvre a une longueur de 15 bits, soit une redondance de 10 bits. D'autre part, les arbres de codage de Huffmann des signaux de différence de couleur comportent un mot réservé formé de cinq 0 consécutifs pour coder la valeur 0 +, ce qui augmente la longueur moyenne des codes de Huffmann par rapport à ceux utilisés dans l'art antérieur. La redondance d'informations dans les séparateurs inter-blocs est estimée égale à moins de 1% du total des informations

4

transmises. Cette redondance est faible mais permet d'améliorer notablement la protection contre les erreurs des séparateurs inter-blocs.

Une bonne détection des séparateurs inter-blocs est indispensable car la perte d'un seul bit des données codées provoque une perte totale de la synchronisation du décodage par rapport au codage et provoque donc la perte d'une image entière.

Dans le cas où un séparateur inter-blocs est erroné, il est possible de resynchroniser le décodage sur le codage au moyen du mot binaire traduisant le rang du bloc, modulo 4.

Il y a au moins quatre possibilités de détecter une erreur dans un bloc, au niveau du séparateur inter-blocs :

- en détectant un séparateur inter-blocs avant d'avoir détecté les deux séparateurs intra-bloc contenus dans tout bloc normal ;
- en détectant un séparateur inter-blocs dont le début ne correspond pas avec la fin des données du bloc précédant, la fin de ces données étant prévue grâce au mot binaire de deux bits traduisant le rang du bloc plus le nombre d'événements modulo 4 ;
- en détectant un rang de bloc, modulo 4, non égal au rang du bloc précédent, incrémenté de 1 ;
- en détectant une somme d'un rang de bloc et d'un nombre d'événements, modulo 4, qui n'est pas égale à la somme du rang du bloc et du nombre d'événements reçus.

La réception d'un bloc n'est validée que si aucune de ces conditions n'est réalisée. L'expérience montre que l'utilisation du rang du bloc, modulo 4, et de la somme du rang du bloc et du nombre d'événements modulo 4, qui sont transmis dans les séparateurs inter-blocs, permet de détecter une grande majorité des erreurs affectant les blocs.

Quand un bloc est détecté comme étant erroné, le procédé consiste alors à le masquer en le remplaçant par le bloc homologue dans la trame qui précède immédiatement la trame en cours de décodage. Il est à remarquer qu'une erreur isolée sur un séparateur inter-blocs entraîne le masquage du bloc qui précède et du bloc qui suit, puisque la fin du premier et le début du second ne sont pas identifiables correctement.

Le type d'erreur le plus gênant est constitué de paquets d'erreurs atteignant au moins quatre blocs consécutifs, car dans ce cas il n'est pas possible de resynchroniser le décodage sur le codage puisque le rang du bloc est transmis modulo 4. Tous les blocs suivants, dans la même image, sont décalés. La synchronisation n'est retrouvée qu'au début de l'image suivante. D'autre part, l'erreur se propage sur les images suivantes dans les blocs codés par un codage inter-images. Il est possible d'augmenter la résistance aux erreurs, des séparateurs inter-blocs, en augmentant le modulo du mot traduisant le rang du bloc et du mot traduisant la somme du rang du bloc et du nombre d'événements.

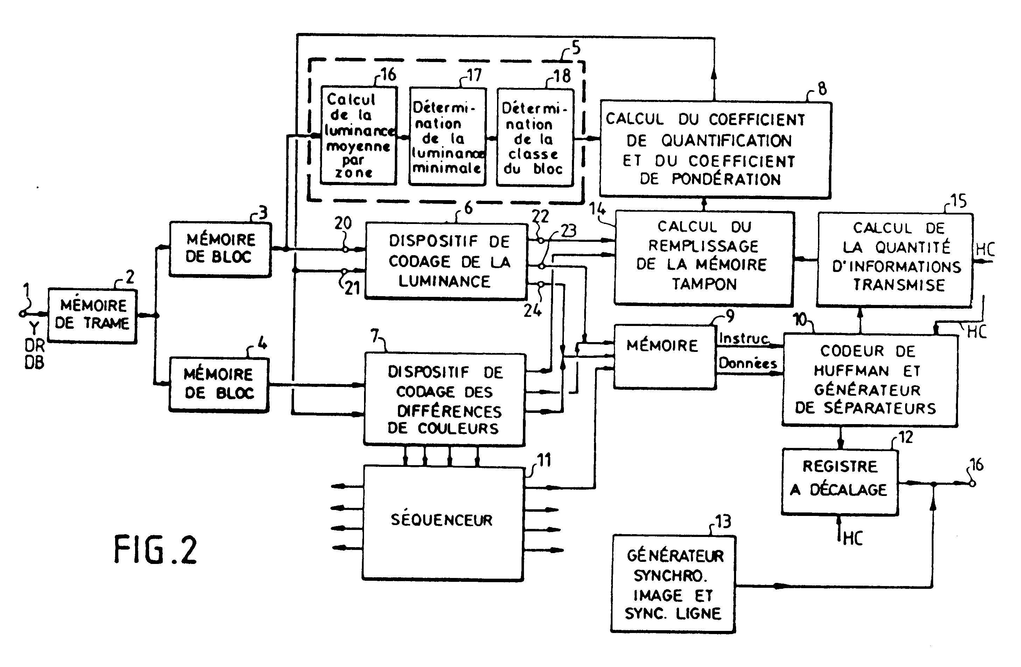

La figure 2 représente le schéma synoptique d'un exemple de réalisation d'un dispositif de codage comportant un dispositif de synchronisation pour la mise en oeuvre du procédé selon l'invention. Cet exemple comporte : une borne d'entrée 1 ; une mémoire de trame 2 ; une première et une seconde mémoire de bloc, 3 et 4 ; un dispositif 5 de classification des blocs ; un dispositif 6 de codage de la luminance ; un dispositif 7 de codage des différences de couleurs ; un dispositif 8 de calcul du coefficient de quantification et du coefficient de pondération ; une mémoire 9 ; un dispositif 10, codeur de Huffmann et générateur de séparateurs ; un séquenceur 11 ; un registre à décalage 12 ; un générateur 13 de synchronisation d'image et de synchronisation de ligne ; un dispositif 14 de calcul du remplissage de la mémoire tampon, constituée par la mémoire 9, le dispositif 10, et le registre 12 ; un dispositif 15, de calcul de la quantité d'informations transmise ; et une borne de sortie 19 reliée à un canal de transmission asynchrone ayant un débit constant de 10 Mb par seconde.

La borne d'entrée 1 reçoit en parallèle une valeur de luminance Y, une valeur de différence de couleur rouge DR, et une valeur de différence de couleur bleue DB, sous la forme d'un triplet de mots binaires. Chaque triplet représente un élément d'une image. La suite d'images considérée est une suite d'images de télévision classique dans laquelle chaque image est constituée de deux trames entrelacées mais ces deux trames sont codées indépendamment. Le signal de luminance est échantillonné à la fréquence de 10,125 MHz et chacun des signaux de différence de couleur est échantillonné à une fréquence de 5,06 MHz. Les dispositifs de codage 6 et 7 fonctionnent en parallèle. Pendant que le dispositif 6 code deux valeurs de luminance, le dispositif 7 code une valeur de différence de couleur rouge et une valeur de différence de couleur bleue.

Une entrée de données de la mémoire de trame 2 est reliée à la borne d'entrée 1. Des entrées de commande de lecture et d'écriture de cette mémoire 2 sont reliées à des sorties du séquenceur 11 par des liaisons non représentées. Le séquenceur 11 commande le stockage des valeurs Y, DR, DB, au fur et à mesure qu'elles sont disponibles. Une sortie de données de la mémoire 2 est reliée à des entrées de données des mémoires de bloc, 3 et 4. Des entrées de commande des mémoires 3 et 4 sont reliées à des sorties du séquenceur 11 par des liaisons non représentées. Le séquenceur 11 commande la lecture dans la mémoire 2 et l'écriture dans la mémoire 3 de 16x16 valeurs de luminance représentatives d'un bloc de 16x16 éléments d'image. Il commande simultanément la lecture dans la mémoire 2 et l'écriture dans la mémoire 4 de 8x16 valeurs de différence de couleur rouge et de 8x16 valeurs de différence de couleur bleue représentatives du même bloc d'éléments d'image.

Une sortie de données de la mémoire de bloc 3 est reliée à une borne d'entrée 20 du dispositif 6 et à une entrée du dispositif de classification 5. Une sortie de données de la mémoire de bloc 4 est reliée à une entrée du dispositif 7. Une autre entrée du dispositif 7 et une borne d'entrée 21 du dispositif 6 sont reliées à une sortie du dispositif 8. Le dispositif 8 fournit la valeur d'un coefficient de quantification et d'un coefficient de pondération, calculées de façon à réguler le débit des informations codées transmises sur le canal de transmission. Le dispositif 8 possède une première entrée reliée à une sortie du dispositif de classification 5, et une seconde entrée reliée à une sortie du dispositif de calcul 14. Le dispositif 14 possède une première entrée reliée à une sortie du dispositif 15, une deuxième entrée reliée à une borne de sortie 22 du dispositif 6, et une troisième entrée à une première sortie du dispositif 7.

La mémoire 9 possède : une première entrée de données reliée à une borne de sortie 23 du dispositif 6 et à une deuxième sortie du dispositif 7 ; une deuxième entrée de données reliée à une borne de sortie 24 du dispositif 6 et à une troisième sortie du dispositif 7 ; et une troisième entrée de données reliée à une sortie du séquenceur 11.

La mémoire 9 a pour rôle de stocker les valeurs des coefficients de transformation cosinus ou des différences de coefficient de transformation cosinus, ou les longueurs de plages de zéros, représentant les valeurs de luminance ou de différence de couleur, pour permettre une régulation du débit des informations codées envoyées dans le canal. Les données reçues par la première entrée de données de la mémoire 9 sont des valeurs de coefficient de transformation ou de différences de coefficients de transformation ou de longueurs de plages de zéros. Les données reçues par la deuxième entrée de données de la mémoire 9 sont des indicateurs correspondant aux données appliquées sur la première entrée de données, pour indiquer le type de codage, inter ou intra-images, et le type de données : données correspondant à des valeurs de luminance, ou à une différence de couleur rouge, ou à une différence de couleur bleue, et en indiquant les coefficients ou différences de coefficients non nuls d'une part, et les longueurs de plages de zéros, d'autre part.

Les données reçues par la troisième entrée de données de la mémoire 9 correspondent aussi aux données reçues par la première entrée et indiquent le début d'un bloc ou, à l'intérieur d'un bloc, le début des données de luminance, ou le début des données d'une différence de couleur rouge, ou le début des données d'une différence de couleur bleue. Ces deux indicateurs sont stockés dans la mémoire 9 en même temps qu'une donnée représentant la luminance ou une différence de couleur, et constituent une instruction pour commander le dispositif 10, codeur de Huffmann et générateur de séparateurs, de manière à coder les données selon huit arbres de Huffmann distincts, et de manière à fournir les séparateurs inter-blocs, les séparateurs intra-blocs, et les séparateurs inter-images. La mémoire 9 possède deux sorties reliées respectivement à deux entrées du dispositif 10, pour lui fournir en parallèle une donnée et une instruction correspondante.

La mémoire 9 possède en outre des entrées de commande d'écriture et de lecture reliées respectivement à des sorties du séquenceur 11 par des liaisons non représentées. Le séquenceur 11 commande la lecture des données, et des instructions correspondantes, au fur et à mesure que le dispositif 10 code et transmet ces données sur le canal. Le dispositif 10 signale au séquenceur 11 sa disponibilité, par une liaison non représentée.

Le dispositif 10 possède une sortie reliée à une entrée parallèle du registre à décalage 12. Le registre 12 possède une sortie reliée à la borne de sortie 16 du dispositif de codage et possède une entrée de commande recevant un signal d'horloge HC qui définit le rythme de transmission sur le canal. Le générateur de synchronisation d'image et de synchronisation de ligne, 13, possède une sortie reliée aussi à la borne de sortie 14 pour fournir des motifs de synchronisation, à la fréquence des images et à la fréquence des lignes. Le générateur 13 est commandé par le séquenceur 11 au moyen d'une liaison non représentée. La transmission des motifs de synchronisation est réalisée tout à fait indépendamment de la transmission des données codées et de leurs séparateurs, en gelant périodiquement la transmission de ces données codées, pour transmettre les motifs de synchronisation. Ces motifs permettront de récupérer, après le décodage, le rythme des images et des lignes, qui est asynchrone par rapport au rythme du canal.

Le dispositif 10 est constitué essentiellement par un séquenceur et par des mémoires mortes. Les mémoires mortes permettent de réaliser un transcodage à partir des données fournies par la mémoire 9, ce transcodage est fonction du type de données et le type de données est indiqué par l'instruction les accompagnant. Le séquenceur est commandé par ces instructions pour sélectionner une mémoire morte correspondant à un code de Huffmann approprié aux données à transcoder. Le séquenceur fournit aussi les mots binaires constituant les séparateurs inter-blocs, les séparateurs intra-bloc, et les séparateurs d'image. Ce séquenceur comporte des compteurs pour déterminer le rang de chaque séparateur d'image, le rang de chaque bloc, modulo 4, et la somme du rang de chaque bloc et du nombre d'événements codés dans ce bloc, modulo 4, afin d'inclure ces valeurs dans les séparateurs, conformément au procédé décrit précédemment.

Le séquenceur 11 fournit des signaux d'horloge à l'ensemble des éléments de ce dispositif de codage et il fournit notamment des signaux de commande aux dispositifs 6 et 7 avec une période correspondant au traitement d'un bloc de 16x16 éléments d'image. Il est à noter que les valeurs représentatives des éléments d'image sont stockées dans la mémoire de trame 2 avec des intervalles de temps d'arrêt correspondant à la suppression de ligne et à la suppression de trame. Mais ces valeurs représentatives sont relues dans la mémoire 2 à une vitesse un peu plus lente, telle que la lecture est réalisée à un rythme régulier sans tenir compte des intervalles de temps de suppression de ligne et de suppression de trame.

Une sortie du dispositif 10 est reliée à une entrée parallèle du registre à décalage 12 pour lui fournir un mot binaire correspondant à une donnée codée ou à un séparateur. Le registre à décalage 12 transmet les bits de ce mot binaire successivement à la borne de sortie 19 sous l'action de l'horloge HC qui correspond au rythme de transmission sur le canal considéré.

Le dispositif 8 fournit un coefficient de pondération qui est le même pour le dispositif 6 de codage de la luminance et pour le dispositif 7 de codage des différences de couleur ; et il fournit un coefficient de quantification qui est le même, à un coefficient multiplicatif près, pour les dispositifs 6 et 7. Ces deux coefficients assurent donc une régulation commune pour le débit des informations à transmettre correspondant à la luminance et pour les informations à transmettre correspondant aux différences de couleurs. La mémoire 9 stocke ensemble ces deux types d'informations à transmettre, ainsi que des indicateurs permettant d'identifier ces différents types d'informations et qui constituent des instructions pour commander le dispositif 10.

La mémoire 9 étant placée en amont du codeur de Huffmann 10, la régulation du flux de bits sur le canal consiste en fait à agir sur l'amplitude des coefficients ou différences de coefficient, par la pondération et la quantification variables, avant de les coder au moyen du codeur de Huffmann. Une réduction de l'amplitude se traduit par une réduction du nombre de bits à la sortie du codeur de Huffmann. Tout se passe comme s'il y avait, à la place de la mémoire 9, du dispositif 10 et du registre 12, seulement une mémoire tampon stockant des données binaires en série et les restituant en série au canal. Le dispositif 14 calcule en fait, non pas le remplissage de la mémoire 9, mais le remplissage de cette mémoire tampon. Le remplissage de la mémoire tampon est égal à la quantité d'informations binaires, sous la forme de codes de Huffmann, restant à transmettre, à l'instant considéré. Il n'y a pas de relation mathématique entre le remplissage de la mémoire 9 et le remplissage de la mémoire tampon. Par conséquent, la capacité de la mémoire 9 est choisie en considérant la longueur moyenne des codes de Huffmann. Dans cet exemple, la longueur moyenne est égale à 2 bits. La mémoire 9 a une capacité de 32K mots, chaque mot étant constitué d'une donnée et d'une instruction, et correspond à une capacité de 64K bits pour la mémoire tampon, telle que définie précédemment.

Le dispositif 15 fournit au dispositif 14 la valeur de la quantité d'informations transmise sur le canal. Les dispositifs 6 et 7 fournissent au dispositif 14 le coût de codage de chaque coefficient ou différence de coefficients. Le dispositif 14 calcule la valeur du remplissage de la mémoire tampon en cumulant les coûts de codage et en soustrayant la quantité transmise. Puis il fournit la valeur du remplissage au dispositif de calcul 8 qui détermine un coefficient de quantification et un coefficient de pondération, en modulant la sévérité de la quantification et de la pondération en fonction de la classe du bloc, déterminée par le dispositif 5.

Le dispositif 8 peut être constitué d'un microprocesseur et d'une mémoire programmée pour réaliser les opérations de calcul décrites ci-après. La programmation de ces opérations de calcul est un travail classique, à la portée de l'Homme de l'Art.

La pondération permet d'exploiter le fait qu'une erreur de quantification sur les coefficients correspondant aux fréquences spatiales élevées n'entraîne pas beaucoup de dégradations sur l'image décodée. Par contre, une erreur de quantification sur les coefficients correspondant aux hautes fréquences spatiales de l'image entraîne une mauvaise restitution de l'image décodée. La pondération est telle que les coefficients correspondant aux basses fréquences spatiales sont favorisés. Le coefficient de pondération, pour la luminance, est calculé par le dispositif 8 selon la formule suivante :

$$P^{lum}(u,v) = exp \left[ - \frac{R.u^2 + v^2}{Pon^2.Nor} \right] \qquad (1)$$

où u et v sont respectivement l'indice de colonne et de ligne du coefficient ou de la différence de coefficients auquel s'applique la pondération ; où R est une constante qui dépend de la taille du bloc et de la fréquence d'échantillonnage de l'image, sa valeur étant de 1,4 pour une fréquence d'échantillonnage de 10,125 MHz et pour une taille de bloc 16 x 16 ; où Nor est un paramètre constant mais fonction de R et qui est donné par la formule suivante :

$$Nor = \frac{2 \times 16^2}{R \times 16^2 + 16^2} \qquad (2)$$

Nor = 0,42 pour une fréquence d'échantillonnage de 10,125 MHz ;

et où Pon est un paramètre variable qui définit la sévérité de la pondération. Sa valeur est fonction du remplissage de la mémoire tampon stockant les informations codées à transmettre, correspondant aux trois types de signal représentatifs des éléments d'image. Ces informations sont celles correspondant aux blocs précédant le bloc d'éléments d'image en cours de codage. Le nombre de bits considéré est celui obtenu après le codage de Huffmann des valeurs non nulles, le codage par plages des valeurs nulles, et après l'insertion de mots séparateurs de données. La sévérité de la pondération est une fonction croissante du remplissage de la mémoire tampon, pour s'opposer à ce remplissage.

Dans cet exemple de mise en oeuvre, la capacité de la mémoire tampon est de 64 kilobits. La valeur du paramètre Pon, et le rapport de pondération obtenu, entre les hautes et les basses fréquences spatiales de l'image, sont donnés dans le tableau ci-dessus :

| Remplissage de la mémoire tampon | Valeur du paramètre Pon | Valeur obtenue pour le rapport de pondération hautes/basses fréquences |
|---|---|---|
| 64 à 48 Kb | 18 | 5 |
| 48 à 40 Kb | 18,5 | 4,5 |
| 40 à 32 Kb | 19 | 4 |
| 32 à 24 Kb | 20 | 3,5 |
| 24 à 16 Kb | 22 | 3 |
| 16 à 8 Kb | 24 | 2,5 |
| 8 à 0 Kb | 27 | 2 |

Ce tableau est stocké dans une mémoire morte incorporée au dispositif 8.

La valeur des coefficients ou des différences de coefficients de transformation pour les signaux de différence de couleur, est pondérée par un coefficient donné par la formule :

$$P^{ch}(u,v) = exp - \left[ \frac{R'.(\frac{U}{2} + 1)^2 + v^2}{Pon^2.Nor'} \right] \qquad (3)$$

où R' est une constante qui dépend de la taille du bloc et de la fréquence d'échantillonnage pour le signal de différence de couleur et qui est égale à 0,7 pour des blocs 16 x 8 et pour une fréquence d'échantillonnage de 5,0625 MHz ; et où Nor' est une constante qui est donnée par la formule suivante :

$$\text{Nor}' = \frac{2 \times 16^2}{R' \times 16^2 + 16^2} \quad (4)$$

$\text{Nor}' = 0{,}59$ pour une fréquence d'échantillonnage de 5,0625 MHz.

Le coefficient de pondération $P^{ch}(u,v)$ est fonction, lui aussi, du remplissage de la mémoire tampon, par l'intermédiaire de la variable Pon, pour participer au processus de régulation du débit des informations codées transmises. Le coefficient de pondération est le même pour les données codées par le codage inter-images et pour celles codées par le codage intra-image.

Le processus de régulation consiste en outre à multiplier la valeur du coefficient ou des différences de coefficients de transformation d'un bloc par un coefficient de quantification qui est fonction du remplissage de la mémoire tampon, celle-ci contenant des données codées correspondant aux blocs précédant le bloc en cours de codage.

L'opération de quantification est réalisée parallèlement sur les coefficients de transformation obtenus par le codage intra-image et sur les différences de coefficients de transformation obtenues par le codage inter-images, après l'opération de pondération. Pour un bloc d'éléments d'image donné, tous les coefficients et toutes les différences de coefficients de transformation correspondant à la luminance sont multipliés par une même valeur de coefficients de quantification. Tous les coefficients et toutes les différences de coefficients de transformation correspondant aux deux signaux de différence de couleur sont multipliés par un coefficient de pondération qui a la même valeur que celui correspondant à la luminance, à une constante multiplicative près. Cette constante est égale à 1,41 pour compenser une constante multiplicative introduite au cours du calcul des transformées cosinus et qui est légèrement différente pour des blocs de tailles différentes, comme c'est le cas pour la luminance d'une part et pour les différences de couleur d'autre part.

Le coefficient de quantification est constant pour un remplissage $E_b$ de la mémoire tampon, inférieur à une valeur de seuil ; et il est décroissant exponentiellement lorsque le remplissage $E_b$ est supérieur à cette valeur de seuil. Dans cet exemple, où la capacité de la mémoire tampon est égale à 64000 bits, la valeur de seuil du remplissage est prise égale à 56000 bits. Pour la luminance, le coefficient de quantification est donné par la formule suivante :

$$N^{lum} = \exp\left(-\frac{E_b - 56000}{\text{Nor}}\right) \text{ si } E_b \text{ est supérieur ou égal à } 56000 \text{ bits} \quad (5)$$

$$N^{lum} = 1 \text{ si } E_b \text{ est inférieur à } 56000 \text{ bits}$$

Pour les signaux de différence de couleur, le coefficient de quantification est donné par la formule suivante :

$$N^{chr} = 1{,}41 . \exp\left(-\frac{E_b - 56000}{\text{Nor}'}\right) \text{ si } E_b \text{ est supérieur ou égal à } 56000 \text{ bits} \quad (6)$$

$$N^{chr} = 1{,}41 \text{ si } E_b \text{ est inférieur à } 56000 \text{ bits}$$

où les constantes Nor et Nor' ont les valeurs définies précédemment.

Les valeurs des coefficients ou des différences de coefficients de transformation sont tronquées après la pondération et la quantification, pour les arrondir à la valeur entière la plus proche.

Le dispositif de comptage 15 détermine le nombre de bits transmis, à partir du signal d'horloge HC qui lui indique le rythme de transmission sur le canal, lequel est connu et constant mais est asynchrone par rapport au rythme de l'échantillonnage des images. La valeur du rapport de pondération des hautes fréquences par rapport aux basses fréquences correspond aux valeurs représentées sur la figure 2. Le coefficient de quantification de la luminance a une valeur constante pour un remplissage de la mémoire tampon variant de 0 à 56 Kb puis décroît exponentiellement pour un remplissage variant de 56 Kb à 64 Kb.

Le dispositif 5 comporte, en série, entre son entrée et sa sortie : un dispositif 16 de calcul de la luminance moyenne dans des zones périphériques de chaque bloc d'éléments d'image ; un dispositif 17 de détermination de la luminance minimale dans chaque bloc ; et un dispositif 18 de détermination de la classe d'un bloc.

Le dispositif 16 calcule la luminance moyenne dans 12 sous-blocs de 4x4 éléments d'images, à la périphérie de chaque bloc, puis calcule la luminance moyenne dans 12 zones de 4x8 éléments, chaque zone étant constituée de deux sous-blocs contigus. Le dispositif 17 détermine la valeur minimale parmi les valeurs moyennes calculées par le dispositif 16. Le dispositif 18 compare cette valeur moyenne par rapport à 7 valeurs de seuil fixées et en déduit un mot binaire, dont la valeur peut aller de 0 à 7, et qui constitue le numéro de classe du bloc, traduisant la difficulté de codage et de restitution de ce bloc. Le dispositif 5 est commandé par le séquenceur 11 au moyen de liaisons non représentées. Le dispositif 5 peut être réalisé sous la forme d'un circuit logique câblé ou sous la forme d'un microprocesseur et d'une mémoire de programme. Dans les deux cas, sa réalisation est à la portée de l'Homme de l'Art.

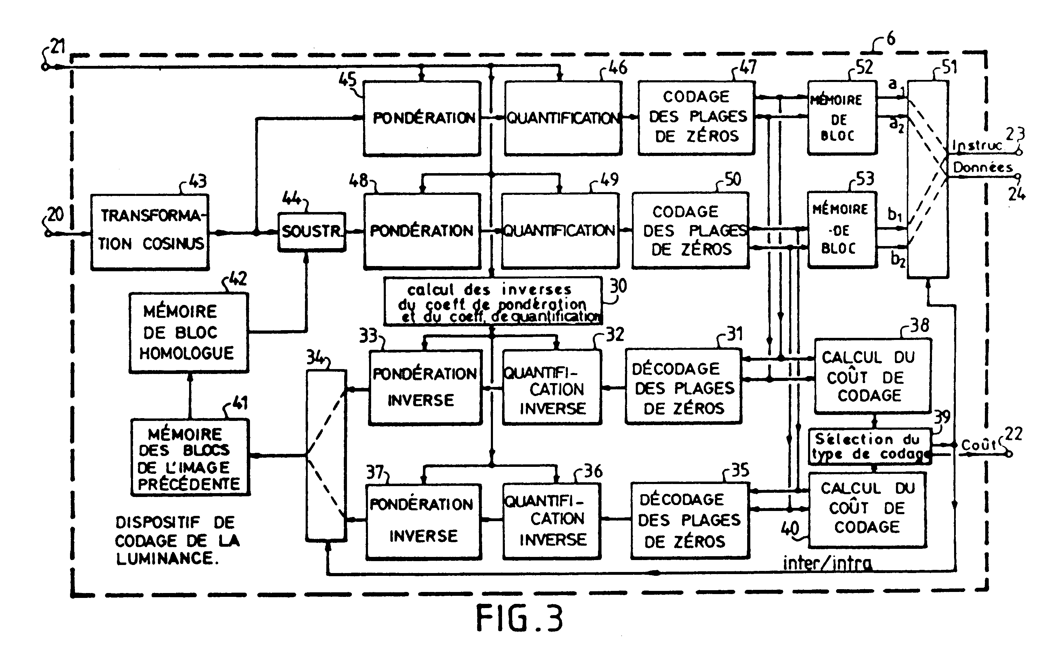

La figure 3 représente le schéma synoptique du dispositif 6 de codage de la luminance. Le dispositif 7 a un schéma synoptique tout à fait analogue. Dans cet exemple de réalisation le dispositif 6 comporte : un dispositif 43 de calcul d'une transformation cosinus bidimensionnelle sur des blocs de dimensions 16x16. Le dispositif 43 possède une entrée reliée à la borne d'entrée 22 pour recevoir successivement les valeurs de luminance correspondant à un bloc d'image. La transformation bidimensionnelle est calculée en deux étapes, correspondant à deux transformations monodimensionnelles, mettant en oeuvre l'algorithme connu de Beyong Gi Lee. Le dispositif 43 peut être réalisé par exemple selon la description de la demande de brevet français n° 2 581 463.

Le dispositif de codage 6 comporte en outre des moyens permettant de calculer parallèlement les coefficients de transformation d'un bloc de valeurs de luminance et les différences entre ces coefficients et les coefficient de transformation du bloc homologue dans la trame précédente. Il réalise les opérations de pondération, de quantification, et de codage des plages de zéros, parallèlement sur les coefficients et sur les différences de coefficients de transformation.

Les coefficients de transformation calculés par le dispositif 43 sont traitées successivement par un dispositif de pondération 45, un dispositif de quantification 46 ; et un dispositif de codage des plages de zéros 47. Ce dernier possède une première et une seconde sortie fournissant respectivement des données codées et un indicateur indiquant le type des données fournies, c'est-à-dire : valeur d'un coefficient de transformation ou longueur d'une plage de zéros. Ces deux sorties sont reliées respectivement à deux entrées d'une mémoire 52 destinée à stocker des données et les indicateurs correspondants, pour un bloc d'éléments d'image codé selon le codage intra-image. La mémoire 52 possède deux sorties de données reliées respectivement à deux entrées $a_1$ et $a_2$ d'un multiplexeur 51, pour lui fournir respectivement un mot de données et un mot indicateur.

Le dispositif 6 comporte aussi un soustracteur 44 ayant une première entrée reliée à la sortie du dispositif 43 pour recevoir la valeur d'un coefficient de transformation et ayant une seconde entrée reliée à une sortie d'une mémoire 42 stockant les valeurs des coefficients de transformation du bloc homologue à celui en cours de traitement, dans la trame codée immédiatement précédemment. Le soustracteur 44 calcule donc la différence entre un coefficient de transformation et le coefficient de transformation homologue dans la trame précédente. Cette différence est traitée ensuite successivement par un dispositif de pondération 48, un dispositif de quantification 49, et un dispositif 50 de codage des plages de zéros. Le dispositif 50 possède deux sorties fournissant respectivement une donnée codée constituée par une différence de coefficients de transformation ou par une longueur de plages de zéros, et fournissant un indicateur correspondant à ce type de données.

Ces deux sorties sont reliées respectivement à deux entrées de données de la mémoire de bloc 53, destinée à stocker des données et les indicateurs correspondants, pour un bloc d'éléments d'image codé selon le codage inter-images. La mémoire 53 possède deux sorties de données reliées respectivement à deux entrées $b_1$ et $b_2$ du multiplexeur 51, pour lui fournir respectivement un mot de données et un mot indicateur, ce dernier constituant une instruction pour commander le dispositif 10.

Le multiplexeur 51 possède une entrée de commande reliée à une sortie d'un dispositif 39 de sélection du type de codage. Il possède en outre deux sorties reliées respectivement aux bornes de sortie 23 et 24 du dispositif 6 pour fournir respectivement une instruction et un mot de données constitué par une valeur de coefficient de transformation, ou une valeur de longueur de plage de zéros. Selon la valeur d'un signal de commande fourni par le dispositif 39, le multiplexeur 51 relie les entrées $a_1$ et $a_2$ respectivement à ses deux sorties ou bien relie les entrées $b_1$ et $b_2$ respectivement à ses deux sorties, selon que le codage à réaliser est du type intra-image ou inter-images respectivement.

Les dispositifs de pondération 45 et 48, et les dispositifs de quantification 46 et 49 possèdent des entrées de commande reliées à la borne d'entrée 21 du dispositif 6 pour recevoir chacun un mot binaire définissant respectivement le coefficient de pondération et le coefficient de quantification appliqués aux coefficients de transformation et aux différences de coefficients de transformation des valeurs de luminance. La borne d'entrée 21 est reliée aussi à une entrée d'un dispositif 30 de calcul de l'inverse du coefficient de pondération et de l'inverse du coefficient de quantification.

Le dispositif 6 comporte en outre un dispositif 31 de décodage des plages de zéros correspondant aux coefficients de transformation, ce dispositif 31 ayant deux entrées reliées respectivement aux deux sorties du dispositif 47, et ayant une sortie fournissant soit un coefficient de transformation non nul fourni par la première sortie du dispositif 47, soit une suite de valeurs nulles, selon la valeur de l'indicateur fourni par la seconde sortie du dispositif 47. Les valeurs de coefficient de transformation nulles ou non nulles fournies par le dispositif 31 sont traitées ensuite successivement par un dispositif de quantification inverse 32 et par un dispositif de pondération inverse 33, puis sont fournies à une première entrée d'un multiplexeur 34.

Le dispositif 6 comporte en outre un dispositif 35 de décodage des plages de zéros correspondant à des différences de coefficients de transformation, ayant deux entrées reliées respectivement à la première et à la seconde sortie du dispositif 50 pour recevoir respectivement des données, constituées par des différences de coefficient de transformation ou des longueurs de plages de zéros, et des indicateurs indiquant le type de ces données. Le dispositif 35 transmet sans les modifier les différences de coefficient de transformation non nulles, et il fournit une suite de valeurs nulles pour reconstituer les plages de différences de coefficient de transformation nulles. Ces valeurs de différence de coefficients de transformation sont fournies par une sortie du dispositif 35 et sont traitées successivement par un dispositif 36 de quantification inverse et par un dispositif 37 de pondération inverse puis sont appliquées à une seconde entrée du multiplexeur 34.

Les dispositifs de pondération inverse 33 et 37, et les dispositifs de quantification inverse 32 et 36 possèdent des entrées de commande reliées à une sortie du dispositif 30 pour recevoir respectivement le coefficient de pondération inverse et le coefficient de quantification inverse correspondant aux valeurs de luminance du bloc en cours de traitement, qui sont calculés par le dispositif 30. Le multiplexeur 34 possède une sortie qui est reliée soit à sa première entrée soit à sa seconde entrée, selon la valeur d'un signal binaire appliqué à une entrée de commande qui est relié à la sortie du dispositif 39 de sélection du type de codage. La sortie du multiplexeur 34 est reliée à une entrée de données d'une mémoire 41 stockant les valeurs des coefficients de transformation de tous les blocs d'éléments d'image de la trame ayant été traitée immédiatement précédemment.

Une sortie de données de la mémoire 41 est reliée à une entrée de données d'une mémoire 42 stockant uniquement les coefficients de transformation du bloc homologue du bloc d'éléments d'image en cours de traitement, dans la trame précédente. Les mémoires 41 et 42 possèdent des entrées de commande d'écriture et de lecture reliées à des sorties du séquenceur 11 par des liaisons non représentées. Une sortie de données de la mémoire 42 est reliée à la seconde entrée du soustracteur 44 pour lui fournir la valeur des coefficients de transformation du bloc homologue, dans un ordre correspondant à l'ordre des coefficients de transformation calculés par le dispositif 43, cet ordre étant par exemple l'ordre en zigzag représenté sur la figure 1. La mémoire 42 et la mémoire 41 jouent le rôle d'une ligne à retard numérique procurant un retard d'une trame.

Le dispositif 6 comporte en outre un dispositif 38 de calcul du coût de codage intra-image et un dispositif 40 de calcul du coût de codage inter-images, pour un même bloc d'éléments d'image. Le dispositif 38 possède deux entrées reliées respectivement aux deux sorties du dispositif 47 et possède une sortie reliée à une entrée du dispositif 39 de sélection du type de codage. Le dispositif 40 possède deux entrées reliées respectivement aux deux sorties du dispositif de codage 50 et possède une sortie reliée à une autre entrée du dispositif 39. Les dispositifs 38 et 40 calculent un coût de codage tenant compte des séparateurs inter-blocs, intra-bloc, et inter-images ; et tenant compte des mots de code de Huffmann utilisés pour coder chaque coefficient de transformation, chaque différence de coefficient de transformation, et chaque plage de zéros. Le dispositif de sélection 39 reçoit donc simultanément deux mots binaires indiquant le coût de codage par le codage intra-image et par le codage inter-images.

Le dispositif 39 détermine quel est le coût le moins élevé et il sélectionne en principe le type de codage correspondant à ce coût. Mais il peut aussi imposer un codage intra-image. Le dispositif 39 possède une première sortie reliée aux entrées de commande des multiplexeurs 34 et 51 pour commander le codage inter-images ou le codage intra-image ; et possède une seconde sortie reliée à la borne de sortie 22 pour fournir le coût de codage du bloc. Ce coût est utilisé pour calculer le remplissage de la mémoire tampon virtuelle.

Pour comparer les coûts de codage et pour imposer le codage intra-image dans certains cas, le dispositif 39 peut être constitué d'un microprocesseur et d'une mémoire morte contenant un programme correspondant à la mise en oeuvre de ce procédé.

Le procédé de forçage comporte trois critères. Un première critère consiste : à calculer la différence entre le coût de codage intra-image et le coût de codage inter-images ; puis à diviser cette différence par le coût du codage inter-image ; puis à comparer le résultat à une première valeur de seuil variable. Cette première valeur de seuil est calculée en comptant le nombre $N(i,j)$ des blocs ayant les coordonnées $(i,j)$ et ayant été codées par un codage inter-images depuis la dernière fois où un bloc de coordonnées $(i,j)$ a été codé par un codage intra-image ; puis en calculant une fonction de $N(i,j)$, divisée par une constante. Cette fonction peut être $N^2(i,j)$, par exemple.

Un deuxième critère de forçage consiste à comparer le nombre $N(i,j)$ par rapport à une deuxième valeur de seuil, $N_0$ , qui est fixée à 30 par exemple. Le codage est forcé en un codage intra-image lorsque $N(i,j)$ dépasse 30.

Un troisième critère, destiné à étaler les opérations de forçage dans le temps, consiste à comparerle numéro du bloc considéré, dans l'image considérée, à une valeur $N_1$ modulo 4. La valeur $N_1$ est une valeur entière variant de 0 à 3 et changeant à chaque trame.

La réalisation de ce programme de calculs pour un microprocesseur est à la portée de l'Homme de l'Art.

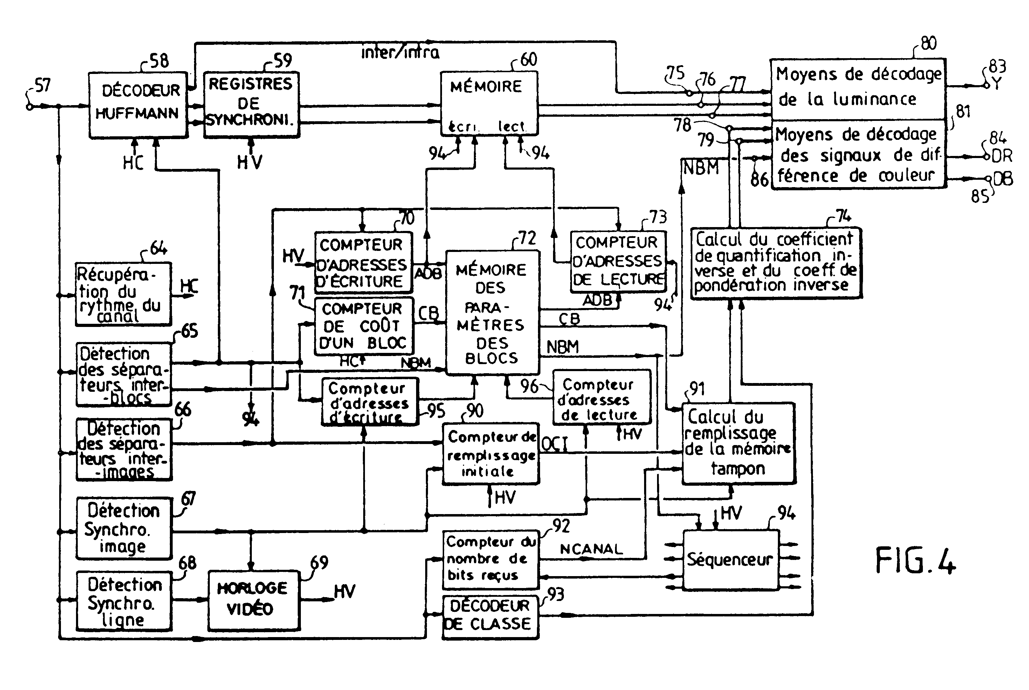

La figure 4 représente le schéma synoptique d'un exemple de réalisation d'un décodeur d'images pour la mise en oeuvre du procédé selon l'invention. Cet exemple comporte : une borne d'entrée 57 reliée à un canal de transmission ; un décodeur de Huffmann 58 ; un ensemble 59 de registres de synchronisation ; une mémoire 60 ; des moyens 80 de décodage de la luminance ; des moyens 81 de décodage des signaux de différence de couleur ; un dispositif 64 de récupération du rythme du canal ; un dispositif 65 de détection des séparateurs inter-blocs ; un dispositif 66 de détection des séparateurs inter-images ; un dispositif 67 de détection des motifs de synchronisation d'image ; un dispositif 68 de détection des motifs de synchronisation de ligne ; une horloge 69, au rythme des signaux vidéo ; un compteur 70 d'adresses d'écriture de la mémoire tampon ; un compteur 71 de coût d'un bloc ; une mémoire 72 de stockage des paramètres d'un bloc ; un compteur 73 d'adresses de lecture de la mémoire tampon ; un dispositif 74 de calcul du coefficient de quantification inverse et du coefficient de pondération inverse ; un compteur 90 de remplissage initial ; un dispositif 91 de calcul du remplissage de la mémoire tampon constitué par la mémoire 60, le décodeur 58, et les registres 59 ; un compteur 92 du nombre de bits reçus ; un décodeur de classe 93 ; un séquenceur 94 ; un compteur 95 d'adresses d'écriture de la mémoire de paramètres ; un compteur 96 d'adresses de lecture de la mémoire de paramètres ; et trois bornes de sortie, 83 à 85, fournissant respectivement une valeur de luminance Y, une valeur de différence de couleur rouge DR, et une valeur de différence de couleur bleue DB.

Le dispositif 67 de détection des motifs de synchronisation d'image et le dispositif 68 de détection des motifs de synchronisation de ligne ont des entrées reliées à la borne d'entrée 57 et ont des sorties reliées respectivement à deux entrées de l'horloge 69. L'horloge 69 fournit un signal d'horloge HV qui déterminera le rythme des valeurs de luminance, et des valeurs de différence de couleur restituées par le décodeur.

Le séquenceur 94 fournit des signaux de commande à tous les éléments du dispositif de décodage en synchronisme avec le signal d'horloge vidéo. Pour simplifier, ce schéma synoptique ne mentionne qu'un seul type de signal d'horloge vidéo, noté HV, mais il y a en fait plusieurs signaux d'horloge vidéo ayant des fréquences sous-multiples de la fréquence d'échantillonnage du signal de luminance. La réalisation de ces signaux d'horloge est à la portée de l'Homme de l'Art.

Le dispositif 64 de récupération du rythme du canal possède une entrée reliée à la borne d'entrée 57 et possède une sortie fournissant un signal d'horloge HC correspondant au rythme des bits transmis sur le canal. Ce signal d'horloge est appliqué notamment à une entrée d'horloge du compteur 71 de coût d'un bloc pour compter le nombre de bits correspondant à chaque bloc reçu.

Le décodeur de Huffmann 58 possède une entrée, reliée à un canal de transmission par la borne d'entrée 57, pour recevoir une suite de valeurs binaires à un rythme constant de 10 Mb par seconde, suite transmise par un dispositif de codage tel que celui décrit précédemment. Il possède aussi une entrée d'horloge recevant le signal d'horloge HC, et une entrée de synchronisation reliée à une première sortie du dispositif 65 de détection des séparateurs inter-blocs. Ce dernier fournit un signal qui réinitialise le décodeur 58 au début de la transmission des données codées de chaque bloc. Le décodeur 58 ne peut décoder un mot de code correspondant à un événement que s'il a correctement décodé le mot de code correspondant à l'événement qui précède. En cas d'erreur de transmission, le décodeur de Huffmann reste désynchronisé jusqu'à la détection du prochain séparateur inter-blocs.

Le dispositif 65 a une entrée reliée à la borne d'entrée 57 pour recevoir les bits transmis et à une entrée reliée à une sortie du décodeur 68 pour recevoir un signal logique chaque fois que décodeur 58 a décodé un événement.

Le dispositif 65 a pour fonction de reconnaître chaque séparateur inter-blocs grâce au motif constituant le radical, et de vérifier l'absence d'erreur de transmission grâce aux deux mots binaires qui suivent le radical. Pour cela, il compare le rang du bloc, modulo 4, transmis dans le séparateur inter-blocs, et le rang du bloc compté d'après le nombre de séparateurs reçus précédemment. En outre le dispositif 65 vérifie le nombre de mots de code reçus, c'est-à-dire le nombre d'événements dans le bloc précédent, en comparant la valeur transmise de la somme du rang du bloc et du nombre d'événements, modulo 4, avec la somme calculée du nombre de blocs détectés précédemment et du nombre d'événements détectés précédemment, modulo 4. Un séparateur inter-blocs est reconnu comme valide par le dispositif 65 lorsqu'il est suivi de deux autres séparateurs inter-blocs vérifiant ces deux conditions.

Lorsqu'une de ces trois vérifications donne un résultat négatif, une deuxième sortie du dispositif de détection 65 fournit un ordre de masquage constitué par un mot binaire NBM indiquant le nombre de blocs à masquer, à une première entrée de la mémoire 72. L'association de cette détection d'erreur et du procédé de masquage des blocs erronés permet de remédier aux transmissions erronées, dans la grande majorité des cas.

En général, des dispositifs correcteurs d'erreurs, adaptés au type de canal, sont intercalés respectivement entre la borne de sortie 19 du dispositif de codage et la borne d'entrée 57 du dispositif de décodage. Ces dispositifs sont classiques et ne sont pas représentés sur les figures. Ils permettent de corriger les petits paquets d'erreurs, au moyen d'une petite redondance des bits transmis. Les vérifications réalisées par le dispositif 65 de détection des séparateurs inter-blocs permettent de détecter les erreurs qui subsistent. Celles-ci peuvent être graves pour l'image restituée, car elles peuvent fausser non seulement la luminance ou les couleurs d'un bloc mais peuvent affecter la position de l'ensemble du bloc si un séparateur inter-blocs n'est pas reconnu. La vérification du rang de chaque séparateur inter-blocs et la vérification du nombre d'événements décodés permet de calculer exactement le nombre NBM des blocs à masquer et permet donc de les masquer et de restituer une image de qualité bien meilleure que si des blocs étaient restitués à des positions inexactes.

La première sortie du dispositif 65 est reliée aussi à une entrée de remise à zéro du compteur 71 de coût d'un bloc ; à une entrée d'horloge du compteur 95 d'adresses d'écriture de la mémoire 72 ; et à une entrée du séquenceur 94, par une liaison non représentée.

Lorsqu'un séparateur inter-blocs est valide, le signal binaire fourni par la première sortie du dispositif 65 réinitialise le décodeur de Huffmann 58, remet à zéro le compteur 71 de coût d'un bloc, incrémente d'une unité le compteur 95 d'adresses d'écriture, et déclenche le séquenceur 94 pour qu'il commande une écriture, dans la mémoire 72, des paramètres du bloc qui est reconnu valide. Les paramètres inscrits dans la mémoire 72 sont : l'adresse, ADB, d'écriture du premier mot des données codées du bloc, dans la mémoire 60 ; le coût de ce bloc, CB, c'est-à-dire le nombre de bits entre les deux séparateurs inter-blocs encadrant ces données ; et la valeur de MBN qui est égale au nombre de blocs à masquer éventuellement, ce nombre étant nul lorsqu'il n'y pas de bloc à masquer. Ces trois paramètres sont fournis respectivement par la sortie du compteur 70 d'adresses d'écriture de la mémoire tampon ; la sortie du compteur 71 de coût d'un bloc ; et par la troisième sortie du dispositif 65 détecteur de séparateurs inter-blocs. Ces trois sorties sont reliées respectivement à trois entrées de données de la mémoire 72. Cette dernière possède une première, une deuxième, et une troisième sortie de données pour restituer respectivement les valeurs de ces trois paramètres. Elle possède aussi des entrées de commande de lecture et d'écriture reliées à des sorties du séquenceur 94 par des liaisons non représentées.

Lorsqu'un séparateur inter-blocs est reconnu valide, le séquenceur 94 commande une écriture dans la mémoire 72 pour stocker les paramètres du bloc qui suit ce séparateur. Le compteur d'adresses d'écriture 95 possède une sortie reliée à une entrée d'adresse d'écriture de la mémoire 72 pour lui fournir une adresse d'écriture des paramètres chaque fois qu'un séparateur inter-bloc est validé. Lorsqu'un ou plusieurs séparateurs inter-blocs ne sont pas reconnus valides, un seul jeu de paramètres est inscrit dans la mémoire 72 pour les données de plusieurs blocs, car tout se passe comme si les données correspondaient à un bloc unique. Ces données sont stockées dans la mémoire tampon 60 bien qu'elles soient erronées, et elles sont lues dans la mémoire 60, mais elles ne sont pas utilisées pour restituer une image. Le compteur 95 possède aussi une entrée de remise à zéro reliée à la sortie du dispositif 67 de détection de la synchronisation d'image, pour être remis à zéro au début de chaque image.

La sortie du compteur 70 d'adresses d'écriture est reliée aussi à une entrée d'adresse d'écriture de la mémoire tampon 60. Une entrée de chargement du compteur d'adresses de lecture, 73, est reliée à la première sortie de données de la mémoire 72 pour recevoir une adresse de début de bloc, ADB ; et possède une sortie reliée à une entrée d'adresse de lecture de la mémoire tampon 60. Le compteur 70 possède une entrée d'horloge recevant le signal d'horloge vidéo HV, et possède une entrée de remise à zéro reliée à la sortie du dispositif 67. La sortie du dispositif 67 est reliée aussi à une entrée de remise à zéro du compteur 73 d'adresses de lecture de la mémoire tampon. Le compteur 73 possède une entrée d'horloge reliée à une sortie du séquenceur 94 par une liaison non représentée.

La deuxième sortie de la mémoire 72 est reliée à une entrée du dispositif 91 de calcul du remplissage de la mémoire tampon pour lui fournir le coût d'un bloc, CB. La troisième sortie de la mémoire 72 est reliée à une entrée du séquenceur 94 et à une borne d'entrée 86 des moyens 80 et 81 pour leur fournir la valeur du nombre de blocs à masquer, NBM.

Le décodeur de Huffmann 58 possède une première et une seconde sortie reliées respectivement à deux entrées de registres 59 qui sont dits de synchronisation car ils permettent de synchroniser les données codées sur l'horloge vidéo HV, alors que le décodeur de Huffmann 58 fonctionne au rythme de l'horloge du canal HC. Le décodeur 58 possède une troisième sortie fournissant un signal binaire de sélection de codage : codage inter-images ou codage intra-image, à une borne d'entrée 75 des moyens 80 et 81. Deux sorties des registres de synchronisation 59 sont reliées respectivement à deux entrées de données de la mémoire tampon 60, correspondant respectivement à des données codées et à un mot binaire d'instruction indiquant le type des données codées. La mémoire tampon 60 possède une première et une seconde sortie reliées respectivement à des bornes d'entrée 77 et 76 des moyens 80 et 81, pour leur fournir respectivement des données codées et un mot binaire d'instruction.

La mémoire 60 possède en outre une entrée d'horloge d'écriture et une entrée d'horloge de lecture reliées respectivement à deux sorties du séquenceur 94 par des liaisons non représentées. Lorsqu'un séparateur inter-bloc a été reconnu valide, le séquenceur 94 commande l'écriture, dans la mémoire 60, des données codées correspondant à au moins un bloc, dans une suite d'adresses fournie par le compteur 70, à la suite de l'adresse de début du bloc ADB, qui est la seule stockée dans la mémoire 72.

Pour la lecture des données codées stockées dans la mémoire 60, le séquenceur 94 commande, pour chaque bloc, ou ensemble de blocs (si une erreur a été détectée) :
- une lecture, dans la mémoire 72, de l'adresse ADB correspondant au début du bloc ;
- un chargement de cette adresse dans le compteur d'adresses de lecture 73 ;
- une lecture à l'adresse ADB, dans la mémoire tampon 60, l'adresse ADB étant fournie à l'entrée d'adresse de lecture par le compteur 73 ;
- une suite d'incrémentations du contenu du compteur 73 ;
- une suite de lectures, dans la mémoire tampon 60, aux adresses fournies par le compteur 73.

La mémoire 60 étant placée en aval du décodeur de Huffmann 58, tout se passe comme si, à la place du décodeur 58 et de la mémoire 60, il y avait une mémoire tampon stockant en série les données binaires transmises par le canal et les restituant en série. Le dispositif de calcul 91 calcule en fait le remplissage de cette mémoire tampon, qui n'est lié par aucune relation mathématique au remplissage de la mémoire 60 car cette dernière contient des mots binaires fournis par le décodeur de Huffmann. Le remplissage de la mémoire tampon est égal à la quantité d'informations binaires, sous la forme de codes de Huffmann, qui reste à décoder, à l'instant considéré. La capacité de la mémoire 60 est identique à la capacité de la mémoire 9 du dispositif de codage et est suffisante dans tous les cas. Dans cet exemple elle est égale à 32K mots, chaque mot étant constitué d'une donnée et d'une instruction.

Le dispositif 74 de calcul du coefficient de quantification et du coefficient de pondération possède deux sorties reliées respectivement à des bornes d'entrée 78 et 79 des moyens 80 et 81, et possède deux entrées reliées respectivement à une sortie du dispositif de calcul 91 et à une sortie du décodeur de classification 93. Le dispositif de calcul 91 possède une première entrée reliée à la deuxième sortie de données de la mémoire 72, fournissant un mot binaire CB qui est le coût de codage d'un bloc ; une deuxième entrée reliée à une sortie du compteur de remplissage initial 90, fournissant une valeur OCI ; une troisième entrée reliée à une sortie du compteur 92, fournissant le nombre de bits reçus NCANAL ; et une quatrième entrée, de remise à zéro, reliée à une sortie du dispositif 67 de détection de la synchronisation d'image.

Le compteur de remplissage initial, 90, possède une entrée d'horloge recevant le signal d'horloge vidéo HV ; une entrée d'arrêt reliée à la sortie du dispositif 66 de détection des séparateurs inter-images ; et une entrée de remise à zéro, reliée à la sortie du dispositif 67 de détection des motifs de synchronisation d'image. Le compteur 90 compte le nombre de bits fournis par le canal à la mémoire tampon, entre l'instant où est détecté un motif de synchronisation image et l'instant où est détecté un séparateur inter-images. Le résultat de ce comptage constitue la valeur du remplissage initial OCI de la mémoire tampon, au début de chaque image.

Le compteur 92 du nombre de bits reçus possède une entrée reliée à la borne d'entrée 57 et une entrée reliée à une sortie du séquenceur 94. Le compteur 92 mesure le nombre exact de bits reçus par la mémoire tampon depuis le début d'un bloc, ce nombre n'étant pas connu, à l'avance, de manière précise car le canal est asynchrone. Le compteur 92 est remis à zéro par un signal fourni par le séquenceur 94, en principe au début de la réception de chaque bloc, mais le séquenceur 94 saute une ou plusieurs remises à zéro lorsque le mot binaire NBM n'est pas nul, c'est-à-dire lorsque il y a au moins un bloc à masquer. Par exemple s'il y a deux blocs à masquer, le séquenceur 94 ne commande une remise à zéro du compteur 92 qu'à la fin du deuxième bloc masqué.

Le décodeur de classe 93 possède une entrée reliée à la borne d'entrée 57 pour décoder un mot binaire indiquant une classe et situé juste après chaque séparateur inter-blocs. Il fournit ce mot binaire au dispositif de calcul 74 qui en tient compte pour calculer le coefficient de quantification et le coefficient de pondération inverse, de la même manière que le dispositif de calcul des coefficients de quantification et de pondération dans le dispositif de codage décrit précédemment.

Le dispositif 74 de calcul du coefficient de quantification inverse et du coefficient de pondération inverse fonctionne de manière analogue au dispositif 30 de calcul du coefficient de quantification et du coefficient de pondération, mais il réalise en plus le calcul de l'inverse du coefficient de quantification et de l'inverse du coefficient de pondération obtenus par les formules (3) à (8).

Dans ces formules le remplissage de la mémoire tampon du dispositif de codage est remplacé par une valeur qui est égale à une constante moins le remplissage de la mémoire tampon du dispositif de décodage. En effet, la somme du remplissage de ces deux mémoires tampons est égale à une constante lorsque la régulation fonctionne bien dans le dispositif de codage et dans le dispositif de décodage, cette régulation ayant pour conséquence que chaque donnée codée subit un retard constant entre l'instant où elle entre dans la mémoire tampon du dispositif de codage et l'instant où elle sort de la mémoire tampon du dispositif de décodage, puisque le débit du canal est constant. Ce retard correspond à la valeur constante de la somme des deux remplissages.

Cette constante est déterminée en mesurant le remplissage initial OCI de la mémoire tampon du dispositif de décodage, au moyen du compteur 90 de remplissage initial, qui mesure le nombre de bits entrant dans le dispositif 58 entre l'instant où le dispositif 67 détecte le motif de synchronisation image, qui est transmis indépendamment du flot de données codées, et l'instant où le dispositif 66 détecte la présence d'un séparateur inter-images dans les données codées arrivant à l'entrée du dispositif 58. Le maintien de la complémentarité du remplissage des deux mémoires tampons permet de calculer avec exactitude le coefficient de quantification inverse et le coefficient de pondération inverse, dans le décodeur. Aucune information traduisant le remplissage de la mémoire tampon n'est envoyée en clair sur le canal de transmission, par conséquent cette information n'est pas perturbée par les erreurs.

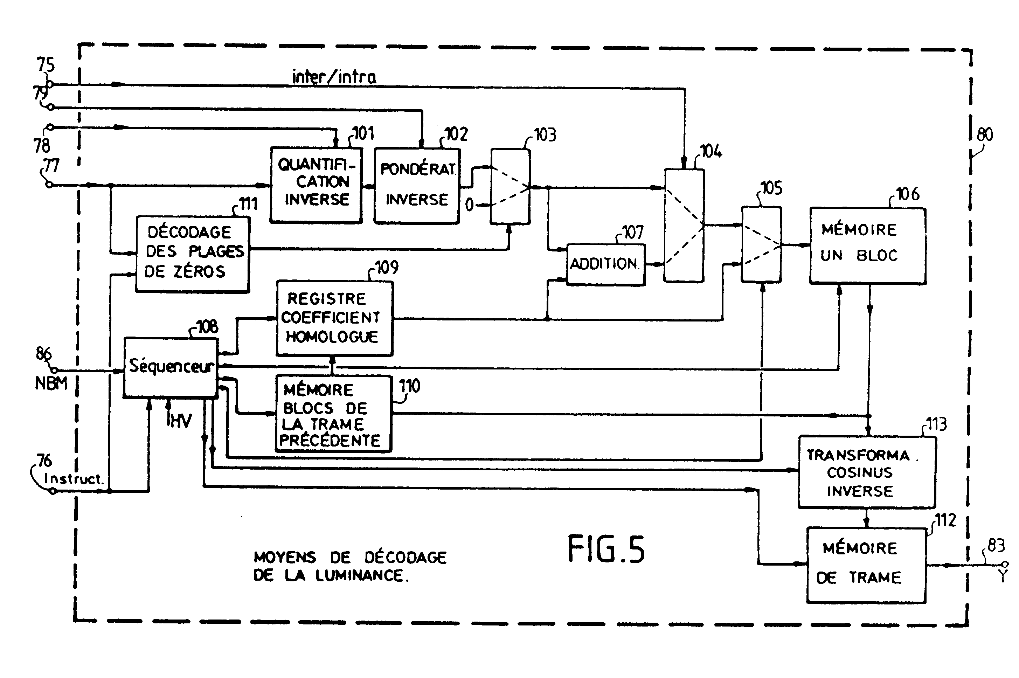

La figure 5 représente le schéma synoptique plus détaillé des moyens 80 de décodage de la luminance. Les moyens 81 ont un schéma analogue, et sont utilisés alternativement pour décoder les signaux de différence de couleur rouge et les signaux de différence de couleur bleue. Les moyens 80 comportent : un dispositif 101 de quantification inverse ; un dispositif 102 de pondération inverse ; trois multiplexeurs 103 à 105, à deux entrées et une sortie ; une mémoire 106 stockant un bloc de coefficients de transformation ; un additionneur 107 ; un séquenceur 108 ; un registre 109 pour stocker un coefficient homologue ; une mémoire 110 pour stocker les blocs de coefficient homologues de la trame précédant la trame courante ; un dispositif 111 de décodage des plages de zéros ; une mémoire de trame 112 ; et un dispositif 113 de calcul de transformées cosinus inverses bidimensionnelles.

Le dispositif 101 possède une entrée de données reliée à la borne d'entrée 77 qui reçoit des données codées fournies par la mémoire tampon 60, et possède une entrée de commande reliée à la borne d'entrée 78 qui reçoit la valeur d'un coefficient de quantification inverse calculé par le dispositif 74. Une sortie du dispositif 101 est reliée à une entrée du dispositif 102. Ce dernier possède aussi une entrée reliée à la borne d'entrée 79 pour recevoir la valeur d'un coefficient de pondération inverse calculée par le dispositif 74, et possède une sortie reliée à une première entrée du multiplexeur 103. Le multiplexeur 103 possède une seconde entrée recevant en permanence une valeur nulle, et possède une sortie qui est reliée soit à la première entrée soit à la seconde entrée, selon la valeur d'un signal binaire appliqué à une entrée de commande, reliée à une sortie du dispositif 111.

Le dispositif 111 décode les plages de zéros à partir des données et à partir d'une instruction, appliquées respectivement sur une première et une seconde entrée qui sont reliées respectivement à la borne d'entrée 77 et à la borne d'entrée 76 des moyens 80. La sortie du multiplexeur 103 fournit donc la valeur d'un coefficient ou d'une différence de coefficient de transformation. Elle est reliée à une première entrée du multiplexeur 104 et à une première entrée de l'additionneur 107. Une seconde entrée de l'additionneur 107 est reliée à une sortie du registre 109 qui lui fournit la valeur du coefficient de transformation homologue du coefficient en cours de décodage, dans l'image précédant l'image en cours de décodage.

La sortie de l'additionneur 107 fournit donc la valeur d'un coefficient de transformation lorsque sa première entrée reçoit la valeur d'une différence de coefficient de transformation. Cette sortie est reliée à la seconde entrée du multiplexeur 104. Le multiplexeur 104 possède une entrée de commande reliée à la borne d'entrée 75 pour recevoir la valeur d'un bit de commande sélectionnant un décodage inter-images ou intra-image, et il possède une sortie reliée à une première entrée du multiplexeur 105. Une seconde entrée du multiplexeur 105 est reliée à la sortie du registre 109 pour recevoir la valeur du coefficient homologue du coefficient en cours de décodage. Une entrée de commande du multiplexeur 105 est reliée à une sortie du séquenceur 108 pour recevoir éventuellement un signal de commande de masquage. Lorsque ce signal de masquage est appliqué au multiplexeur 105, ce dernier transmet la valeur du coefficient homologue fourni par le registre 109, au lieu de transmettre la valeur du coefficient de transformation fournie par le multiplexeur 104.

La sortie du multiplexeur 105 est reliée à une entrée de données de la mémoire 106. La mémoire 106 possède des entrées de commande d'écriture et de lecture reliées respectivement à des sorties du séquenceur 108, ce dernier commandant la mémoire 106 pour stocker tous les coefficients de transformation d'un bloc avant de commander la transformation cosinus inverse de ces coefficients. Le séquenceur 108 possède une entrée recevant le signal d'horloge vidéo HV, une entrée reliée à la borne d'entrée 76 pour recevoir une instruction fonction du type des données à décoder et une entrée reliée à la borne d'entrée 86 pour recevoir la valeur NBM du nombre de blocs à masquer. Si NBM = 0 le séquenceur 108 ne commande pas de masquage. Si NBM est différent de 0, le séquenceur 108 commande le masquage du nombre de blocs indiqués.

La mémoire 110 possède une entrée de données reliée à une sortie de données de la mémoire 106 pour stocker tous les blocs de coefficients de transformation résultant du décodage d'une trame, afin de pouvoir fournir les coefficients homologues des coefficients de transformation de la trame qui suivra. La mémoire 110 possède une sortie de données reliée à une entrée de données du registre 109, et possède des entrées de commande de lecture et d'écriture reliées à des sorties du séquenceur 108.

La sortie de données de la mémoire 106 est reliée aussi à une entrée du dispositif de calcul 113. Ce dernier possède une entrée de remise à zéro reliée à une sortie du séquenceur 108, et possède une sortie reliée à une entrée de données de la mémoire d'image 112. La mémoire de trame 112 possède une entrée de commande de lecture et d'écriture reliée à des sorties du séquenceur 108 et possède une sortie de données reliée à la borne de sortie 83 du décodeur, pour fournir une suite de valeurs de luminance Y. La mémoire de trame 112 a pour rôle de reconstituer la suite de valeurs de luminance dans l'ordre classique de balayage d'une trame alors que le dispositif de calcul 113 fournit les valeurs de luminance décodées dans l'ordre de découpage des blocs dans la trame. La réalisation du dispositif de calcul 113 pour réaliser des transformations cosinus inverse est classique. Il peut être réalisé selon la description donnée dans la demande de brevet français FR-A-2 581 463.

**Revendications**

1. Procédé de synchronisation pour la transmission, sur un canal asynchrone, d'une suite d'images codées au moyen d'un code à longueur variable, caractérisé en ce qu'il consiste à transmettre, en plus des données, des séparateurs appelés séparateurs inter-blocs, pour séparer les données correspondant à des blocs distincts d'éléments d'image, et des séparateurs appelés séparateurs d'images pour séparer les données correspondant à des images successives ; et en ce qu'il consiste, en outre, à transmettre des premiers motifs de synchronisation à la fréquence des lignes d'image et des seconds motifs de synchronisation à la fréquence des images, en interrompant la transmission des données et des séparateurs ; les séparateurs étant inimitables par des concaténations licites de données et/ou de séparateurs.

2. Procédé selon la revendication 1, caractérisé en ce que chaque séparateur d'images est répété plusieurs fois, et comporte un radical fixé suivi d'un mot binaire indiquant le rang du séparateur dans les répétitions, modulo un nombre fixé.

3. Procédé selon la revendication 1, caractérisé en ce que chaque séparateur inter-blocs comporte, un radical fixé et un mot binaire traduisant, modulo un nombre fixé, le rang d'un bloc d'éléments d'image associé à ce séparateur ; et comporte en outre un mot binaire traduisant, modulo un nombre fixé, la somme de ce rang et du nombre des événements qui sont codés par les données correspondant au bloc associé à ce séparateur.

4. Dispositif de synchronisation pour la transmission sur un canal asynchrone, d'une suite d'images codées au moyen d'un code à longueur variable, pour la mise en oeuvre du procédé selon la revendication 1, caractérisé en ce qu'il comporte :

- des moyens (10) pour insérer un séparateur appelé séparateur inter-blocs entre deux paquets de données à transmettre correspondant à deux blocs distincts d'éléments d'image et pour insérer un séparateur appelé séparateur d'images entre deux paquets de données à transmettre correspondant à deux images successives, ces séparateurs étant inimitables par les concatanations licites de données ;
- des moyens (13) pour interrompre la transmission des données et des séparateurs, et pour insérer des motifs de synchronisation respectivement à la fréquence des images et à la fréquence des lignes d'image ;
- des moyens (65, 66) pour reconnaître, parmi les données transmises, les séparateurs d'images et les séparateurs inter-blocs et pour séparer les données correspondant à chaque bloc d'éléments d'image ;
- des moyens (67 et 68) pour reconnaître les motifs de synchronisation parmi les données transmises et pour restituer un signal d'horloge à la fréquence des images et un signal d'horloge à la fréquence des lignes.

5. Dispositif selon la revendication 4, caractérisé en ce que les moyens (10) pour insérer des séparateurs d'images, répètent plusieurs fois chaque séparateur d'images, en le constituant d'un radical fixé et en faisant suivre le radical par un mot binaire indiquant le rang du séparateur dans les répétitions, modulo un nombre fixé ; et en ce que les moyens (66) pour reconnaître les séparateurs d'images, déterminent la position d'un séparateur d'images, dans la suite des données, à partir de la position de chaque radical qui est reconnu, et en fonction de la valeur du mot binaire accompagnant chaque radical reconnu.

6. Dispositif selon la revendication 4, caractérisé en ce que les moyens (10) pour insérer des séparateurs inter-blocs comportent des moyens pour constituer chaque séparateur inter-blocs d'un radical fixé, suivi d'un premier mot binaire traduisant, modulo un nombre fixé, le rang d'un bloc d'éléments d'image associé à ce séparateur ; et suivi d'un second mot binaire traduisant, modulo un nombre fixé, la somme de ce rang et du nombre des événements qui sont codés par les données correspondant au bloc associé à ce séparateur ;

et en ce que les moyens (65) pour reconnaître les séparateurs inter-blocs comportent des moyens pour vérifier que le rang d'un séparateur inter-bloc reconnu correspond à la valeur du premier mot binaire qui suit ce séparateur et pour vérifier que la somme du rang du séparateur reconnu et du nombre d'événements codés par les données correspondant au bloc associé au séparateur reconnu, correspond à la valeur du second mot binaire qui suit le séparateur reconnu.

## Claims

1. Synchronization method for the transmission, on an asynchronous channel, of a series of images which are coded by means of a variable-length code, characterised in that it consists in transmitting, in addition to data, separators called inter-block separators, for separating the data corresponding to distinct blocks of image elements, and separators called image separators separating the data corresponding to successive images; and in that it further consists in transmitting first synchronization patterns at the frequency of the image lines and second synchronization patterns at the frequency of the images, by interrupting the transmission of the data and of the separators; the separators being inimitable by legal concatenations of data and/or of separators.

2. Method according to Claim 1, characterised in that each image separator is repeated several times, and comprises a fixed radical followed by a binary word indicating the rank of the separator in the repetitions, modulo a fixed number.

3. Method according to Claim 1, characterised in that each inter-block separator comprises a fixed radical and a binary word expressing, modulo a fixed number, the rank of a block of image elements associated with the separator; and further comprises a binary word expressing, modulo a fixed number, the sum of this rank and of the number of events which are coded by the data corresponding to the block associated with this separator.

4. Synchronization device for the transmission on an asynchronous channel of a series of images which are coded by means of a variable-length code, for the implementation of the method according to Claim 1, characterised in that it comprises:
- means (10) for inserting a separator called an inter-block separator between two data packets to be transmitted corresponding to two distinct blocks of image elements and for inserting a separator called an image separator between two data packets to be transmitted corresponding to two successive images, these separators being inimitable by the legal concatenations of data;
- means (13) for interrupting the transmission of the data and of the separators, and for inserting synchronization patterns respectively at the frequency of the images and at the frequency of the image lines;
- means (65, 66) for recognizing, among the data transmitted, the image separators and the inter-block separators and for separating the data corresponding to each block of image elements;
- means (67 and 68) for recognizing the synchronization patterns among the data transmitted and for restoring a clock signal at the frequency of the images and a clock signal at the frequency of the lines.

5. Device according to Claim 4, characterised in that the means (10) for inserting image separators repeat each image separator several times, by assembling it from a fixed radical and by having the radical followed by a binary work indicating the rank of the separator in the repetitions, modulo a fixed number; and in that the means (66) for recognizing the image separators, determine the position of an image separator, in the data series, on the basis of the position of each radical which is recognized, and on the basis of the value of the binary work accompanying each recognized radical.

6. Device according to Claim 4, characterised in that the means (10) for inserting inter-block separators comprise means for assembling each inter-block separator from a fixed radical, followed by a first binary word expressing, modulo a fixed number, the rank of a block of image elements associated with this separator; and followed by a second binary word expressing, modulo a fixed number, the sum of this rank and of the number of events which are coded by the data corresponding to the block associated with this separator;

and in that the means (65) for recognizing the inter-block separators comprise means for checking that the rank of a recognized inter-block separator corresponds to the value of the first binary word which follows the separator and for checking that the sum of the rank of the recognized separator and of the number of events coded by the data corresponding to the block associated with the recognized separator, corresponds to the value of the second binary word which follows the recognized separator.

**Patentansprüche**

1. Verfahren zur Synchronisierung einer Folge von mittels eines Kodes variabler Länge kodierten Bildern für die Übertragung über einen asynchronen Kanal, dadurch gekennzeichnet, daß bei ihm zusätzlich zu den Daten Interblocktrenner genannte Trenninformationen übertragen werden, um die Daten voneinander zu trennen, die verschiedenen Blöcken entsprechen, und Bildtrenner genannte Trenninformationen, um die Daten voneinander zu trennen, die aufeinanderfolgenden Bildern entsprechen, und daß bei ihm ferner erste Synchronisiermuster mit der Zeilenfrequenz der Bilder und zweite Synchronisiermuster mit der Bildfrequenz übertragen werden, indem die Übertragung der Daten und der Trenner unterbrochen wird, welche Trenner nicht durch zulässige Signalfolgen von Daten und/oder von Trennern nachahmbar sind.

2. Verfahren nach Anspruch 1, dadurch gekennzeichnet, daß jeder Bildtrenner mehrfach wiederholt wird und einen festgelegten Stammteil aufweist, dem ein binäres Wort folgt, das den Rang des Trenners in den Wiederholungen modulo einer festen Zahl anzeigt.

3. Verfahren nach Anspruch 1, dadurch gekennzeichnet, daß jeder Interblocktrenner einen festgelegten Stammteil und ein binäres Wort aufweist, das modulo einer festen Zahl den Rang eines diesem Trenner zugeordneten Bildelementblocks wiedergibt, und ferner ein binäres Wort aufweist, das modulo einer festen Zahl die Summe dieses Rangs und der Anzahl von Ereignissen wiedergibt, die durch die Daten kodiert sind, die dem diesem Trenner zugeordneten Block entsprechen.

4. Einrichtung zur Synchronisierung einer Folge von mittels eines Kodes variabler Länge kodierten Bildern für die Übertragung über einen asynchronen Kanal, um das Verfahren von Anspruch 1 auszuführen, dadurch gekennzeichnet, daß sie folgendes aufweist:

- Mittel (10) zum Einfügen einer Interblocktrenner genannten Trenninformation zwischen zwei zu übertragende Datenpakete, die zwei unterschiedlichen Bildelementblöcken entsprechen, und zum Einfügen einer Bildtrenner genannten Trenninformation zwischen zwei zu übertragende Datenpakete, die zwei aufeinanderfolgenden Bildern entsprechen, welche Trenninformationen durch zulässige Bitfolgen für Daten nicht nachahmbar sind,
- Mittel (13) zum Unterbrechen der Übertragung der Daten und der Trenninformationen und zum Einfügen von Synchronisiermustern mit der Bildfrequenz bzw. der Bildzeilenfrequenz;
- Mittel (65, 66) zum Wiedererkennen der Bildtrenner und der Interblocktrenner unter den übertragenen Daten und zum Abtrennen der Daten, wie sie jedem Bildelementblock entsprechen; und
- Mittel (67 und 68) zum Wiedererkennen der Synchronisiermuster unter den übertragenen Daten und zum Wiedergewinnen eines Taktsignals mit der Bildfrequenz und eines Taktsignals mit der Zeilenfrequenz.

5. Einrichtung nach Anspruch 4, dadurch gekennzeichnet, daß die Mittel (10) zum Einfügen der Bildtrenner jeden Bildtrenner mehrfach dadurch wiederholen, daß sie ihn aus einem festgelegten Stammteil bilden, dem sie ein Binärwort folgen lassen, das den Rang des Trenners in den Wiederholungen Modulo einer festen Zahl anzeigt, und daß die Mittel (66) zum Wiedererkennen der Bildtrenner die Position eines Bildtrenners in der Folge der Daten ab der Position jedes wiedererkannten Stammteils bestimmen, abhängig vom Wert des binären Worts, das jeden erkannten Stammteil begleitet.

6. Einrichtung nach Anspruch 4, dadurch gekennzeichnet, daß die Mittel (10) zum Einfügen der Interblocktrenner Mittel zum Erstellen jedes Interblocktrenners aus einem festgelegten Stammteil aufweisen, dem ein erstes Binärwort folgt, das modulo einer festgelegten Zahl den Rang eines Bildelementblocks wiedergibt, der diesem Trenner zugeordnet ist, und dem ein zweites Binärwort folgt, das modulo einer festgelegten Zahl die Summe aus diesem Rang und der Anzahl von Ereignissen wiedergibt, die durch die Daten kodiert werden, die dem diesem Trenner zugeordneten Block entsprechen;

- und daß die Mittel (65) zum Erkennen der Interblocktrenner Mittel zum Verifizieren aufweisen, daß jeder Rang eines erkannten Interblocktrenners dem Wert des ersten Binärworts entspricht, das diesem Trenner folgt, und zum Verifizieren, daß die Summe aus dem Rang des erkannten Trenners und der Anzahl von Ereignissen, die durch diejenigen Daten kodiert sind, die dem dem erkannten Trenner zugeordneten Block entsprechen, dem Wert des zweiten Binärworts entsprechen, das dem erkannten Trenner folgt.

EP 0 323 363 B1

SÉPARATEUR D'IMAGES
RÉPÉTÉ 8 FOIS

DONNÉES CODÉES
POUR LE BLOC N°1

SÉPARATEUR
INTER - BLOCS

DONNÉES CODÉES
POUR LE BLOC N°2

RANG DU
SÉPARATEUR

0 0 0 _ _ _ _ _ _ _ _ _ _ 0 1

16 BITS

3 BITS

RANG DU BLOC
+ NOMBRE
D'ÉVÈNEMENTS
MODULO 4

RADICAL

RANG DU BLOC
MODULO 4

0 0 0 _ _ _ _ _ _ 0 1

11 BITS

2 BITS

2 BITS

INTER/INTRA

INTER/INTRA

INTER/INTRA

CLASSE

SÉPA-
RATEUR
INTRA
BLOC

SÉPA-
RATEUR
INTRA
BLOC

DONNÉES
ROUGE

DONNÉES
BLEU

DONNÉES
LUMINANCE

3 BITS

NOMBRE
DE BITS
VARIABLE

1 BIT

1 BIT

1 BIT

FIG.1

**FIG.2**

MÉMOIRE DE TRAME — 2

Y DR DB — 1

MÉMOIRE DE BLOC — 3

MÉMOIRE DE BLOC — 4

Calcul de la luminance moyenne par zone — 16

Détermination de la luminance minimale — 17

Détermination de la classe du bloc — 18

— 5

DISPOSITIF DE CODAGE DE LA LUMINANCE — 6

20
21
22
23
24
14

DISPOSITIF DE CODAGE DES DIFFÉRENCES DE COULEURS — 7

CALCUL DU COEFFICIENT DE QUANTIFICATION ET DU COEFFICIENT DE PONDÉRATION — 8

CALCUL DU REMPLISSAGE DE LA MÉMOIRE TAMPON

CALCUL DE LA QUANTITÉ D'INFORMATIONS TRANSMISE — 15

HC

MÉMOIRE — 9

Instruc.
Données

CODEUR DE HUFFMAN ET GÉNÉRATEUR DE SÉPARATEURS — 10

HC
HC

SÉQUENCEUR — 11

REGISTRE A DÉCALAGE — 12

16

HC

GÉNÉRATEUR SYNCHRO. IMAGE ET SYNC. LIGNE — 13

EP 0 323 363 B1

FIG.3

DISPOSITIF DE CODAGE DE LA LUMINANCE.

inter/intra

Instruc
Données
Coût

MÉMOIRE DE BLOC
MÉMOIRE DE BLOC
CODAGE DES PLAGES DE ZÉROS
CODAGE DES PLAGES DE ZÉROS
DÉCODAGE DES PLAGES DE ZÉROS
DÉCODAGE DES PLAGES DE ZÉROS
QUANTIFICATION
QUANTIFICATION
QUANTIFICATION INVERSE
QUANTIFICATION INVERSE
PONDÉRATION
PONDÉRATION
PONDÉRATION INVERSE
PONDÉRATION INVERSE
SOUSTR
TRANSFORMATION COSINUS
MÉMOIRE DE BLOC HOMOLOGUE
MÉMOIRE DES BLOCS DE L'IMAGE PRÉCÉDENTE
CALCUL DU COÛT DE CODAGE
CALCUL DU COÛT DE CODAGE
Sélection du type de codage
calcul des inverses du coeff de pondération et du coeff de quantification

22

**FIG.4**

- 57
- 58 — DÉCODEUR HUFFMANN — HC
- 59 — REGISTRES DE SYNCHRONI. — HV
- inter/intra
- 60 — MÉMOIRE — écri. lect. — 94, 94
- 75 76 77
- 80 — Moyens de décodage de la luminance — 83 Y
- 81 — Moyens de décodage des signaux de différence de couleur — 84 DR, 85 DB
- 78 79 — NBM — 86
- 64 — Récupération du rythme du canal — HC
- 65 — Détection des séparateurs inter-blocs
- 66 — Détection des séparateurs inter-images
- 67 — Détection Synchro. image
- 68 — Détection Synchro. ligne
- 69 — HORLOGE VIDÉO — HV
- 70 — COMPTEUR D'ADRESSES D'ÉCRITURE — HV — ADB
- 71 — COMPTEUR DE COÛT D'UN BLOC — CB — HC — NBM
- 72 — MÉMOIRE DES PARAMÈTRES DES BLOCS — CB — NBM
- 73 — COMPTEUR D'ADRESSES DE LECTURE — ADB — 94
- 74 — Calcul du coefficient de quantification inverse et du coeff. de pondération inverse
- 95 — Compteur d'adresses d'écriture
- 90 — Compteur de remplissage initiale — HV — OCI
- 96 — Compteur d'adresses de lecture — HV
- 91 — Calcul du remplissage de la mémoire tampon
- 92 — Compteur du nombre de bits reçus — NCANAL
- 93 — DÉCODEUR DE CLASSE
- 94 — Séquenceur — HV

EP 0 323 363 B1

FIG.5

MOYENS DE DÉCODAGE DE LA LUMINANCE.